# EUROPÄISCHE PATENTSCHRIFT

(11) **EP 2 043 884 B1**
(45) Veröffentlichungstag und Bekanntmachung des Hinweises auf die Patenterteilung: **26.09.2012**
(21) Anmeldenummer: 07801452.9
(22) Anmeldetag: 19.07.2007
(51) Int. Cl.: B60H 1/00, B61D 27/00, B61L 15/00

(54) **ANORDNUNG ZUR BEDIENUNG EINER HEIZUNGS- UND/ODER KLIMAANLAGE FÜR SCHIENENFAHRZEUGE**
ASSEMBLY FOR OPERATING A HEATING AND/OR AIR CONDITIONING SYSTEM FOR RAILWAY VEHICLES
ENSEMBLE DE COMMANDE D'UNE INSTALLATION DE CHAUFFAGE ET/OU DE CLIMATISATION POUR VÉHICULES SUR RAILS

(30) Priorität: 20.07.2006 DE 102006034127
(43) Veröffentlichungstag der Anmeldung: 08.04.2009
(73) Patentinhaber: Bombardier Transportation GmbH, 10785 Berlin (DE)
(72) Erfinder: HAMMER, Walter, 68239 Mannheim (DE); GERSTL, Katja, 68809 Neulussheim (DE); KARRER, Klaus, 68519 Viernheim (DE); THOMS, Markus, 68519 Viernheim (DE)
(74) Vertreter: Patentanwälte Bressel und Partner
(86) Internationale Anmeldenummer: PCT/EP2007/006613
(87) Internationale Veröffentlichungsnummer: WO 2008/009481

(56) Entgegenhaltungen:
- DE-A1- 3 609 098
- DE-A1- 19 702 957
- GB-A- 2 361 074
- US-A1- 2002 145 516
- HUBER A ET AL: "BORDINFORMATIK UND TORNAD-DATENNETZ" ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 113, Nr. 6/7, 1. Juni 1989 (1989-06-01), Seiten 283-289, XP000094473 ISSN: 0941-0589

## Beschreibung

Die Erfindung betrifft eine Anordnung zur Bedienung einer Heizungs- und/oder Klimaanlage eines Schienenfahrzeuges oder Schienenfahrzeug-Zugverbandes. Gegenstand der Erfindung ist ferner ein Schienenfahrzeug oder Schienenfahrzeug-Zugverband mit einer solchen Anordnung.

Unter einer Klimaanlage wird auch eine Anlage verstanden, mit der der Luftdruck in Innenräumen von Schienenfahrzeugen eingestellt werden kann.

Führerstände für Schienenfahrzeuge oder Zugverbände weisen eine Vielzahl von Bedien - und Anzeigeelementen auf, die der Fahrzeugführer beachten bzw. bedienen muss. Darunter sind z. B. Elemente für den Betrieb von Einrichtungen wie Türsteuerung, Zugsicherung, Fahrzeug-Antriebssteuerung, Fahrzeug-Bremse und/oder Fahrzeug-Stromversorgung. Neben diesen für den Betrieb des Schienenfahrzeugs bzw. Zugverbandes unbedingt notwendigen Einrichtungen gibt es jedoch auch Einrichtungen, die dem Komfort des Triebfahrzeugführers dienen. Dazu gehören Heizungs- und/oder Klimaanlagen für den Fahrzeugführerraum.

Die Fertigung und Montage von Führerständen erfordert hohen Aufwand, da eine Vielzahl von Bauteilen zu montieren ist und die elektrischen Funktionen der Anzeige- und Bedienelemente zuverlässig gewährleistet sein müssen. Sicherheitskritische und für den Fahrbetrieb zwingend erforderliche Funktionen müssen dabei höhere Anforderungen an die dauerhafte Zuverlässigkeit und Ausfallsicherheit erfüllen als Komfortfunktionen wie Heizungs- und Klimasteuerung. Die Montage wird daher üblicherweise getrennt ausgeführt und es werden dementsprechend separate Leitungswege zur Übertragung von Steuersignalen gewählt.

Die US 2002/0145516 A1 beschreibt ein System, das zumindest einen Sensor zum Detektieren einer Anwesenheit einer Person in einem Fahrzeug einschließt.

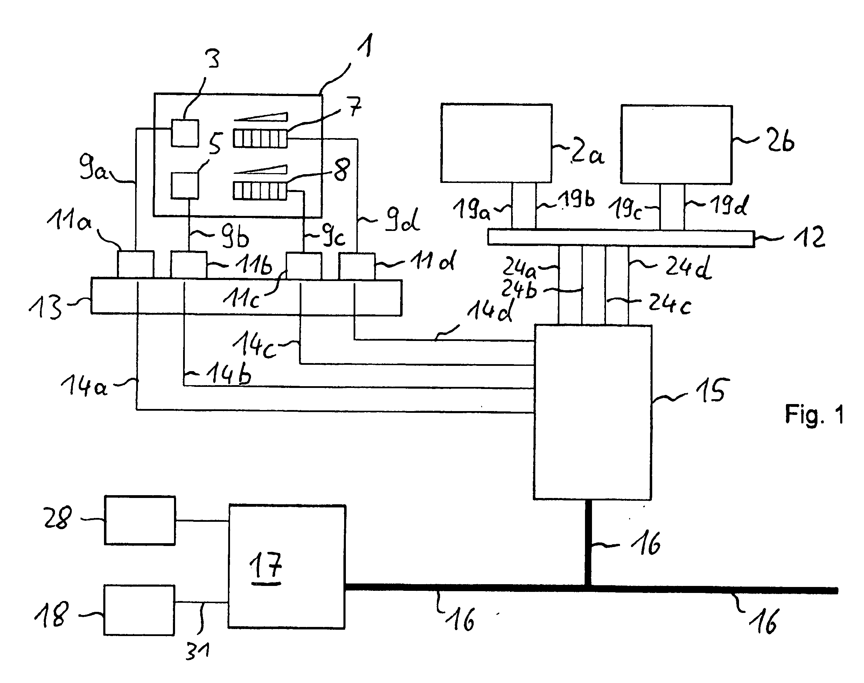

Die DE 19702957 A1 beschreibt eine Anzeigevorrichtung zur optischen Darstellung von Informationsanzeigeelementen in unterschiedlichen Farben. Unter Bezugnahme auf Figur 1 wird eine Vorderansicht einer Frontblende eines Steuergeräts für eine Kfz-Klimaanlage beschrieben. Die Frontblende weist eine Vielzahl von Bedientasten auf, mittels derer sich verschiedene Betriebszustände und Betriebsparameter der Kfz-Klimaanlage einstellen lassen. Ferner sind in der Frontblende zwei Aussparungen vorgesehen, hinter denen sich die Anzeigefläche einer Anzeigevorrichtung befindet. Die Frontblende befindet sich in der Öffnung eines Gehäuses, in dem diverse elektronische Baugruppen für die Steuerung der Klimaanlage untergebracht sind. Auf der rückwärtigen Seite der Frontblende befindet sich eine Leiterplatte, an die ein Flachkabel angeschlossen ist. Die Leiterplatte weist eine Vielzahl von Lichtquellen auf, die der Hinterleuchtung der Bedientasten dienen.

Die DE 3609098 A1 beschreibt eine Fahrzeugheizungsanlage, bei der mehrere funktionell zusammenarbeitende und miteinander verbundene elektrische und/oder elektronische Komponenten über Busleitungen angeschlossen sind, die einen Signalaustausch ermöglichen. Dadurch soll sich die Verkabelung bei Fahrzeugheizungsanlagen vereinfachen.

Die XP 000094473 ("Bordinformatik und TORNAD-Datennetz" von Andre Huber, J.L. Le Bellec und D. Duhot, veröffentlicht in "ZEV Zeitschrift für Eisenbahnwesen und Verkehrstechnik" Die Eisenbahntechnik + Glasers Annalen, Georg Siemens Verlagsbuchhandlung, Berlin, DE, Band 113, Nr. 6/7, 1. Juni 1989, Seiten 283 - 289) beschreibt, dass in Schienenfahrzeugen netzförmige Datenübermittlungsstrukturen eingesetzt werden können.

Die GB 2361074 A offenbart ein Steuerungssystem für eine Klimaanlage, insbesondere für Automobile. Das Steuerungssystem weist eine Eingabeeinheit auf, die Eingabemittel für Benutzer und eine Speichereinrichtung enthält. Ferner weist das Steuerungssystem eine Steuerungsmodul-Einheit auf, die mit der Eingabeeinheit verbunden ist. Das Steuerungsmodul enthält Mittel zum Lesen der Daten, die auf der Speichereinrichtung gespeichert sind und Mittel zum Ausgeben von Instruktionen, um ein oder mehrere Ausgabemittel in Reaktion auf die Steuerungseingaben über die Eingabemittel zu betreiben.

In dem Ausführungsbeispiel, das in der Figurenbeschreibung der GB 2361074 A beschrieben ist, ist ein Kommunikationsbus vorgesehen, der als paralleler Bus ausgestaltet ist. Die von dem Treiber der Anzeigeeinheiten über den Bus übertragenden Signale werden nicht weiter gewandelt sondern können unmittelbar von den Anzeigeeinheiten empfangen werden. Umgekehrt werden die von den Eingabeelementen, die der Benutzer bedient, erzeugten Signale über den Bus an die digitale Eingabeeinheit übertragen.

Es ist eine Aufgabe der vorliegenden Erfindung, den Aufwand für die Montage und Funktionsprüfung von Fahrzeugführerständen zu verringern, die Wahrscheinlichkeit für einen Montagefehler zu verringern und die Materialkosten zu reduzieren. Außerdem soll es vorzugsweise möglich sein, auch Bedien- und Anzeigeelemente für Komfortfunktionen für den Fahrzeugführer übersichtlich anzuordnen.

Es wird vorgeschlagen, insbesondere die Bedien- und Anzeigeelemente für Komfortfunktionen (d. h. insbesondere für eine Heizungs- und/oder Klimaanlage) zu Baugruppen zusammenzufassen, die vor der Montage im Führertisch auf korrekte Funktion geprüft werden können. Insbesondere wird daher vorgeschlagen, einen Signalwandler vorzusehen. Der Signalwandler ist so ausgestaltet, dass er an einen digitalen Bus, insbesondere einen seriellen Bus (z. B. CAN-Bus) angeschlossen werden kann. Beim Betrieb des Signalwandlers wandelt dieser digitale Bussignale, die über den Bus übertragen werden, in Anzeigesignale um, mit denen die Anzeigeelemente angesteuert werden. Außerdem wandelt der Signalwandler Bediensignale, die von den Bedienelementen erzeugt werden, in die Bussignale um. Der Signalwandler weist eine entsprechende Schnittstelle auf, über die er an den Bus angeschlossen werden kann.

Es ist daher möglich, sämtliche für den elektrischen Anschluss der Anzeige- und Bedienelemente erforderlichen Bauteile vor der Montage in dem Führertisch fertig zusammenzusetzen bzw. miteinander zu verbinden (Vormontage). Daher können die Funktionen der Bedienelemente und Anzeigeelemente vor der Endmontage, d. h. zwischen Vormontage und dem Einbau in den Führertisch, auf korrekte Funktion geprüft werden. Diese Prüfung schließt vorzugsweise auch die Funktion des Signalwandlers mit ein.

Dabei ist es nicht zwingend erforderlich, dass alle Kontakte der Bedienelemente und alle Anzeigemittel der Anzeigeelemente bereits in der Vormontage mit montiert werden. Beispielsweise kann jedem der Bedienelemente zumindest ein elektrisches Bauelement zugeordnet sein, das das eigentliche Bediensignal erzeugt, wenn ein entsprechender Kontakt geschlossen wird. Der Kontakt oder Schalter selbst muss nicht zwingend vormontiert werden (auch wenn dies bevorzugt wird). Für die Funktionsprüfung reicht es dann aus, dass das elektrische Bauelement bereits vormontiert wurde und über eine entsprechende oder mehrere entsprechende elektrische Verbindungen mit dem Signalwandler verbunden ist. Bei den Anzeigeelementen reicht es aus, wenn ein zugeordnetes elektrisches Bauelement vormontiert worden ist und über eine oder mehrere entsprechende elektrische Verbindungen mit dem Signalwandler verbunden worden ist.

Der Begriff elektrisches Bauelement schließt elektronische Bauelemente, insbesondere mikroelektronische Bauelemente mit ein.

Beispielsweise kann für die Funktionsprüfung nach der Vormontage der Signalwandler an einen Bus angeschlossen werden, der mit einem Prüfrechner verbunden ist. Dieser Prüfrechner simuliert die Funktion eines Rechners für den tatsächlichen Betrieb des Schienenfahrzeugs oder des Zugverbandes und kann Prüfprogramme ausführen, mit denen sämtliche Bedien- und Anzeigefunktionen getestet werden können.

Z. B. kann für die Funktionsprüfung ein Testgerät die Bedienung durch den Fahrzeugführer simulieren, sodass automatisch geprüft werden kann, ob die Anzeigeelemente ordnungsgemäß funktionieren. Ferner können Detektoren zur automatischen Erfassung der Anzeigen eingesetzt werden. Die Bedienung und Überprüfung der Anzeigefunktionen bei der Funktionskontrolle vor der Endmontage kann aber auch per Hand ausgeführt werden.

Der Signalwandler (der auch als Buskoppler bezeichnet werden kann) kann in besonderer Ausgestaltung eine bautechnische Einheit mit den zuvor erwähnten elektrischen Bauelementen der Anzeigeelemente und Bedienelemente bilden, so dass die Endmontage weiter erleichtert ist.

Eine solche bautechnische Einheit kann in besonders bevorzugter Ausgestaltung eine Oberfläche bilden, die nach dem Einbau in den Führertisch (d.h. nach der Endmontage) einen Teil der Oberfläche des Führertischs bildet. In diesem Fall können die Bedienelemente und Anzeigeelemente in der Oberfläche der Einheit angeordnet sein und/oder durch die Oberfläche hindurch betrachtet werden. Zum Beispiel kann die Oberfläche der Einheit durch eine (vorzugsweise transparente oder durchsichtige) Abdeckfolie einer Folientastatur gebildet werden, die zumindest einen Teil der Anzeigeelemente und Bedienelemente abdeckt und vorzugsweise alle diese Elemente abdeckt, sodass die Elemente gegen äußere Einflüsse wie z. B. Feuchtigkeit, Schmutz und schädliche Substanzen geschützt werden. In besonderer Ausgestaltung kann die bautechnische Einheit auch den Signalwandler enthalten, der zumindest alle Signale für die bzw. von den in der Einheit angeordneten Anzeigeelemente und Bedienelemente wandelt.

Wenn die bautechnische Einheit keinen Signalwandler zum Anschluss an einen Bus aufweist, kann die bautechnische Einheit auch anders als über einen Bus (z. B. über ein mehradriges Kabel oder einen Kabelbaum) mit einem Rechner (siehe dazu weiter unten, insbesondere dem Leitrechner) des Schienenfahrzeugs oder der Lokomotive verbunden sein.

Es kann in der vormontierten bautechnischen Einheit eine Leiterplatte vorgesehen sein, die eine Mehrzahl der elektrischen Bauelemente trägt und vorzugsweise alle elektrischen Bauelemente der Anzeigeelemente und Bedienelemente trägt, die für den Betrieb der Heizungs- und/oder Klimaanlage im Führertisch erforderlich sind. Die fertig montierte Anordnung (nach der Endmontage und vorzugsweise bereits nach der Vormontage) weist mehrere elektrische Verbindungen (insbesondere Leiterbahnen auf der Platine) zum Übertragen der Bediensignale und der Anzeigesignale auf, über die die Leiterplatte (und allgemeiner formuliert eine bautechnische Einheit) mit dem Signalwandler auf der Leiterplatte verbunden ist. Vorzugsweise ist der Signalwandler auf derselben Platine wie die Bauelemente angeordnet. Wenn der Platz auf der Platine jedoch nicht ausreicht, kann beispielsweise eine zweite Platine vorgesehen sein, auf der der Signalwandler angeordnet ist. In diesem Fall können die beiden Platinen z. B. über Kabel elektrisch miteinander verbunden sein.

Nach der Endmontage ist der Signalwandler über den Bus mit einem Rechner zur Ausführung von Rechenaufgaben für einen Betrieb der Heizungs- und/oder Klimaanlage und zur Erzeugung von Stellsignalen zum Einstellen der Heizungs- und/oder Klimaanlage verbunden, wobei der Rechner eine Schnittstelle zur Übertragung der Stellsignale an die Heizungs- und/oder Klimaanlage aufweist. Beispielsweise führt der Rechner beim Betrieb der Anlage Regelungsfunktionen aus, etwa die Regelung der Temperatur im Führerraum in Abhängigkeit von Temperaturmesswerten.

Ferner werden der Signalwandler und/oder eine oder mehrere der elektrischen Bauelemente der Anzeige- und Bedienelemente bei der Endmontage mit einer Stromversorgung verbunden.

Wenn der Signalwandler und die elektrischen Bauelemente keine gemeinsame bautechnische Einheit bilden, kann die elektrische Verbindung zwischen dem Signalwandler und den elektrischen Bauelementen beispielsweise über eine oder mehrere Steckverbindungen und entsprechende ein- oder mehradrige Kabel hergestellt werden. Dabei ist es von Vorteil, wenn die elektrischen Bauelemente von einer einzigen bautechnischen Einheit (z. B. der Leiterplatte) getragen werden.

In jedem dieser Fälle kann die aufwendige Einzelmontage langer elektrischer Leitungen von den Bedienelementen und Anzeigeelementen zu der Steuerung der Heizungs- und/oder Klimaanlage entfallen. Vielmehr kann die Übertragung der Signale wie beschrieben über den Bus erfolgen. Dies ermöglicht der Signalwandler, der wie beschrieben, vorzugsweise bereits vormontiert wurde und daher bei der Endmontage ohne hohen Aufwand im oder am Führertisch angeordnet werden kann.

Besonders bevorzugt wird eine Ausgestaltung, bei der der Rechner ein zentraler Leitrechner des Schienenfahrzeugs oder Zugverbandes ist, der auch weitere Funktionen für den Betrieb weiterer Einrichtungen des Schienenfahrzeugs oder Zugverbandes ausführt, wie Türsteuerung, Fahrzeugdiagnose, automatische Fahr-/Bremssteuerung, SiFa (Sicherheits-Fahrschaltung) und/oder Sprachausgabe an den Fahrzeugführer. In diesem Fall kann derselbe Bus, der die digitalen Signale für den Betrieb der Heizungs- und/oder Klimaanlage überträgt auch der Übertragung von digitalen Signalen für die Bedienung und/oder Zustands-Anzeige der genannten weiteren Funktionen dienen.

Dem liegt die Erkenntnis zugrunde, dass trotz der eingangs erwähnten unterschiedlichen Anforderungen an Zuverlässigkeit und Ausfallsicherheit von Komfortfunktionen und für den Fahrbetrieb zwingend erforderlichen Funktionen derselbe Bus für die Übertragung sämtlicher digitaler Signale zu dem Leitrechner benutzt werden kann. Die Nutzung desselben Busses, der nach heutigem Entwicklungsstand sehr zuverlässig betrieben werden kann, steht der unterschiedlichen Behandlung der Signale in dem Leitrechner und in oder an dem Führertisch nicht entgegen.

Der an dem Führertisch benötigte Raum für den Anschluss von Anzeige- und Bedienelementen wird dadurch verringert. Es kann daher eine sehr kompakte und übersichtliche Anordnung sämtlicher Anzeige- und Bedienelemente in dem Führertisch erzielt werden. Insbesondere können die Anzeige- und Bedienelemente für die Heizungs - und/oder Klimaanlage an übersichtlicher Stelle, z. B. am Rand des Führertischs angeordnet werden. Sie können somit im unmittelbaren Sichtbereich des Fahrzeugführers liegen. Früher befanden sich diese Elemente dagegen häufig nicht in der Platte bzw. Pultoberfläche des Führertischs.

Vorzugsweise wird der Signalwandler auch für den Betrieb der weiteren Funktionen genutzt und wandelt die entsprechenden digitalen Bussignale für den Betrieb der weiteren Funktionen in Anzeigesignale um, mit denen entsprechende Anzeigeelemente angesteuert werden, und/oder wandelt die von den Bedienelementen für den Betrieb der weiteren Funktionen erzeugten Bediensignale in die Bussignale um. Es ist somit nicht erforderlich (wenn auch möglich) mehr als einen Signalwandler zu verwenden.

Sollte für die für den Fahrbetrieb oder die Sicherung des Fahrbetriebes erforderlichen Bedien- und/oder Anzeigeelemente eine redundante Ausführung der Signalübertragung zu dem Leitrechner erforderlich oder wünschenswert sein, können ein zweiter Signalwandler und ein zweiter Bus vorgesehen sein, über den der zweite Signalwandler mit dem Leitrechner verbunden ist oder mit einem redundanten Leitrechner verbunden ist. In diesem Fall wird vorzugsweise nur einer der Busse für die Signale der Heizungs- und/oder Klimaanlage benutzt.

Ein Ausführungsbeispiel der Erfindung wird nun unter Bezugnahme auf die beigefügte Zeichnung beschrieben. Die einzelnen Figuren der Zeichnung zeigen:
- Fig. 1: schematische Darstellung einer Anordnung mit Bedien- und Anzeigeelementen, die signaltechnisch über einen Signalwandler und einen Bus mit einem zentralen Leitrechner einer Lokomotive verbunden sind, und
- Fig. 2: eine schematische Darstellung eines Querschnitts durch eine vormontierte bautechnische Einheit, die die Bedienelemente und Anzeigeelemente für den Betrieb der Heizungs- und/oder Klimaanlage enthält.

Fig. 1 zeigt schematisch die signaltechnische Verschaltung von Anzeige- und Bedienelementen, die in einem Fahrzeugführertisch angeordnet werden können.

Eine Mehrzahl von Anzeigeelementen 7, 8 und eine Mehrzahl von Bedienelementen 3, 5 dienen der Steuerung und Überprüfung des Betriebszustandes einer Heizungs- und/oder Klimaanlage des Schienenfahrzeugs oder von Einheiten eines Zugverbandes. Dargestellt sind in Fig. 1 jeweils zwei Anzeigeelemente und zwei Bedienelemente. In der Regel werden konkrete Ausführungsformen jedoch mehr Bedienelemente und Anzeigeelemente aufweisen. Insbesondere können die Bedienelemente auch Anzeigefunktionen ausführen, z. B. anzeigen, welche Bedienaktion ausgeführt wurde. Sie können aber auch nicht nur den angestrebten sondern auch den erzielten Betriebszustand einer zugeordneten Einrichtung anzeigen. Dies gilt nicht nur für das anhand von Fig. 1 erläuterte Ausführungsbeispiel und nicht nur für Bedienelemente einer Heizungs- und/oder Klimaanlage.

Mit dem Bedienelement 3 wird beispielsweise die Soll-Temperatur in dem Führerstand eingestellt. Die tatsächliche Temperatur in dem Führerstand wird beispielsweise durch das Anzeigeelement 5 dargestellt. Ein ebenfalls auf dieselbe physikalische Größe bezogenes Paar von Elementen sind das Bedienelement 5 und das Anzeigeelement 8, die z. B. auf eine andere einstellbare Temperatur oder die Feuchte bezogen sind.

Die folgende Figurenbeschreibung ist daher auf Konfigurationen und Anordnungen mit anderen Anzahlen von Bedien- und Anzeigeelementen übertragbar.

Gemäß Fig. 1 können mehrere Bedien- und Anzeigeelemente Teil einer gerätetechnischen Baueinheit sein, die vormontiert wird. Es können aber auch lediglich Teile der Bedienelemente und Anzeigeelemente zu gerätetechnischen Einheiten zusammengefasst sein.

Unter einem Bedienelement oder Anzeigeelement wird auch die Kombination aus einem sichtbaren Teil oder einem für die Bedienung zugänglichen Teil des Elements und aus zumindest einem weiteren Teil des Elements verstanden, das für die Funktion des sichtbaren bzw. zugänglichen Teils erforderlich ist. Bei Anzeigeelementen kann beispielsweise ein elektronisches Bauteil verwendet werden das ein anderes Bauteil mit einem Anzeigesignal ansteuert, so dass das andere Bauteil entsprechend dem Anzeigesignal etwas zur Anzeige bringt. Insbesondere kann es sich bei dem sichtbaren Teil eines Anzeigeelements um ein Leuchtelement oder um ein Display handeln (dies gilt nicht nur den hier beschriebenen Fall, dass der für den Fahrzeugführer sichtbare oder zugängliche Teil des Elements von einem weiteren Teil des Elements lokal getrennt ist). Bei dem Anzeigesignal kann es sich dann um einen elektrischen Strom handeln, der das Leuchtelement zum Leuchten bringt oder um komplexe digitale Signale oder Signalfolgen, die auf dem Display eine entsprechende visuelle Darstellung bewirken. Zur Erzeugung des Stroms, der das Leuchtelement zum Leuchten bringt, ist beispielsweise ein elektronisches Bauteil vorgesehen, welches einen Signalausgang zum Ausgeben des Anzeigesignals aufweist, welches einen Signaleingang aufweist, über den es angesteuert werden kann, und welches an eine Stromversorgung angeschlossen ist. Für die Ansteuerung von Displays sind entsprechende elektrische und/oder elektronische Schaltungen bekannt, die die Anzeigesignale erzeugen.

Bedienelemente weisen beispielsweise als für die Bedienung zugängliches Bauteil Elemente mit berührungsempfindlicher Oberfläche (die z. B. Teil eines berührungsempfindlichen Displays sein kann oder unabhängig von einem Display vorgesehen sein kann), Taster und/oder Schalter auf. In jedem Fall wird durch die Bedienung des Bedienteils ein Signal erzeugt, das dem nicht unmittelbar für die Bedienung zugänglichen Teil des Bedienelements zugeführt wird.

Bevorzugt wird jedoch, dass die Bedienelemente und Anzeigeelemente jeweils eine bautechnische Einheit bzw. ein Bauelement bilden, das einstückig ist und daher auf einfache Weise montiert werden kann.

In dem Ausführungsbeispiel, das in Fig. 1 dargestellt ist, sind sämtliche Anzeigeelemente und sämtliche Bedienelemente zu einer gerätetechnischen Einheit 1 zusammengefasst, die beispielsweise vormontiert werden kann und daher auf einfache Weise in einen Führertisch eingebaut werden kann. Die Formulierung "sämtliche" bezieht sich hier lediglich auf die Heizungs- und/oder Klimaanlage. Weitere Bedien- und Anzeigeelemente für andere Einrichtungen können zusätzlich und/oder als Teile anderer Einheiten vorgesehen sein. In Fig. 1 sind außer der Einheit 1, die die Bedienelemente und Anzeigeelemente für die Heizungs- und/oder Klimaanlage aufweist, weitere in den Führertisch integrierbare Einheiten 2a und 2b dargestellt, die jeweils Bedien- und/oder Anzeigeelemente für den Betrieb anderer Einrichtungen, wie z. B. Türsteuerung, Zugsicherung, Fahrzeug-Antriebssteuerung, Fahrzeug-Bremse und/oder Fahrzeug-Stromversorgung aufweisen.

Für den Betrieb der Heizungs- und/oder Klimaanlage ist eine Leiterplatte 13 vorgesehen, an der die Bedienelemente 3, 5 und die Anzeigeelemente 7, 8 angeordnet (das heißt befestigt und elektrisch angeschlossen) sind. Die Darstellung von Fig. 1 ist schematisch zu verstehen. Die Einheit 1 zeigt auch die Ansicht der Bedienelemente und Anzeigeelemente, wie sie sich dem Fahrzeugführer bietet. Außerdem sind Elemente bzw. Bauteile 11 a, 11b, 11c und 11 d dargestellt, die unmittelbar an der Leiterplatte 13 angeordnet sind.

Die Bauteile, 11a, 11b, 11 c und 11 d können diejenigen Teile der Bedienelemente und Anzeigeelemente sein, die für den Fahrzeugführern nicht unmittelbar zugänglich sind, wenn die Elemente nicht einstückig ausgestaltet sind. In diesem Fall ist die Darstellung der Fig. 1 so zu verstehen, dass das Bauteil 11a von der Leiterplatte 13 getragen wird und über eine Signalleitung 9a mit dem im Führertisch zugänglichen Teil des Bedienelements 3 verbunden ist. Entsprechendes gilt in diesem Fall für das Bedienelement 5, welches über eine Signalleitung 9b mit einem Bauteil 11 b auf der Leiterplatte 13 verbunden ist. Bauteile 11 c, 11d sind in diesem Fall über Signalleitungen 9c bzw. 9d mit den für den Fahrzeugführer sichtbaren Teilen der Anzeigeelemente 8 bzw. 7 verbunden.

Wie erwähnt sind die Bedienelemente und Anzeigeelemente jedoch vorzugsweise jeweils eine bautechnische Einheit. In diesem Fall ist die Darstellung von Fig. 1 so zu verstehen, dass das gesamte Bedienelement bzw. Anzeigeelemente unmittelbar an der Leiterplatte 13 angeordnet ist. Die Striche 9a bis 9d sind dann lediglich als logische Zuordnungen zu verstehen. Die Bauteile 11a - 11d sind dann mit den Anzeigeelementen 7, 8 bzw. den Bedienelementen 3, 5 identisch.

Die Bauteile 11a - 11d, die von der Leiterplatte 13 getragen werden, sind über Signalleitungen 14a - 14d jeweils mit einem Signalwandler 15 verbunden. Über die Signalleitungen 14c, 14d werden die Ansteuersignale zum Ansteuern der Bauteile 11c, 11d von dem Signalwandler 15 zu diesen Bauteilen 11c, 11d übertragen. Über die Signalleitungen 14a, 14b werden die von den Bauteilen 11a, 11b der Bedienelemente 3, 5 erzeugten Signale zu dem Signalwandler 15 übertragen.

Der Signalwandler 15 ist an einen seriellen Bus 16 zur Übertragung von digitalen Signalen angeschlossen. An den Bus 16 ist zumindest noch ein zentraler Leitrechner 17 des Schienenfahrzeugs bzw. Schienenfahrzeug-Verbandes angeschlossen. Alternativ zu der Ausgestaltung gemäß Fig. 1 kann jedoch auch ein Teil der Signalleitungen 14a - 14d an mehrere Signalwandler angeschlossen sein, die z. B. wiederum jeweils über separate Busverbindungen mit dem zentralen Leitrechner 17 verbunden sind.

Der Leitrechner 17 ist über Steuerleitungen und/oder Zustandserfassungsleitungen 31 mit der Heizungs- und/oder Klimaanlage 18 verbunden. Diese Leitungsverbindungen zwischen dem Leitrechner 31 und der Anlage 18 können jedoch auch ganz oder teilweise über den Bus 16 realisiert sein. In diesem Fall ist also die Anlage 18 an den Bus 16 angeschlossen.

Über die Zustandserfassungsleitungen werden Zustände der Anlage 18 erfasst, wie beispielsweise eine oder mehrere Temperaturen von Fahrgasträumen, Feuchtigkeitswerte der Fahrgasträume und/oder Druckwerte des Luftdrucks innerhalb der Fahrgasträume. Über die Steuerleitungen wird die Anlage 18 von dem Leitrechner 17 angesteuert und auf diese Weise beispielsweise die Temperatur, der Druck und/oder die Luftfeuchtigkeit eingestellt. Vorzugsweise weist der Leitrechner Software und/oder Hardware auf, durch die entsprechende Regelungen der Temperatur, des Drucks und/oder der Feuchte implementiert sind. Die Solltemperatur, der Solldruck und/oder die Sollfeuchtigkeit wird durch Bedienung der Bedienelemente 3, 5 für die Regelung oder Steuerung der Anlage 18 vorgegeben. Stellt der Fahrzeugführer beispielsweise durch Bedienung des Bedienelements 3 die Solltemperatur auf einen höheren Wert als zuvor ein, wird ein entsprechendes Bediensignal über die Signalleitung 14a zu dem Signalwandler 15 übertragen wird. Dieser wandelt das Signal in ein Signal um, das gemäß dem vereinbarten Übertragungsprotokoll des Busses 16 über diesen zu dem Leitrechner 17 übertragen wird. Vom Leitrechner 17 werden die Bussignale empfangen und der implementierten Regelung zur Verfügung gestellt.

Außer der Heizungs- und/oder Klimaanlage 18 können weitere Einrichtungen an den Leitrechner 17 angeschlossen sein. In Fig. 1 ist stellvertretend für solche Einrichtungen eine Türsteuerung 28 dargestellt. In der im Führertisch verbauten Einheit 2a befinden sich entsprechende Bedienelemente und Anzeigeelemente der Türsteuerung. Wiederum sind die für den Fahrzeugführer sichtbaren bzw. unmittelbar zugänglichen Teile dieser Elemente signaltechnisch über Signalleitungen 19a, 19b (insbesondere Leiterbahnen) mit nicht näher dargestellten Bauteilen auf einer Leiterplatte 12 verbunden, wobei sowohl die Elemente als auch die Bauteile auf der Leiterplatte 12 angeordnet sind. Die so realisierten Bedien- und Anzeigeelemente sind über Signalleitungen 24a, 24b mit dem Signalwandler 15 oder alternativ mit einem anderen Signalwandler verbunden, der an den Bus 16 oder einen anderen Bus angeschlossen ist.

Beim Betrieb der Türsteuerung gibt der Fahrzeugführer beispielsweise über die Betätigung eines entsprechenden Bedienelements in Einheit 2a vor, dass die Außentüren in Passagierwaggons automatisch geschlossen werden sollen. Dieses Bediensignal gelangt über die zuvor beschriebene Signalverbindungskette zu dem Leitrechner 17, welcher die eigentliche Türsteuerung 28 entsprechend ansteuert. Die Türsteuerung 28 startet dann den vorgeschriebenen Zyklus zum Schließen der Türen. Wenn die Türen geschlossen sind, wird ein entsprechendes Rückmeldungssignal über den Leitrechner 17, den Bus 16, den Signalwandler 15 und die Signalleitungen 24a oder 24b zu den Anzeigeelementen der Türsteuerung übertragen und für den Fahrzeugführer sichtbar zur Anzeige gebracht.

Fig. 1 zeigt, dass die Leiterplatte 12 außerdem an eine weitere Einheit 2b angeschlossen ist, die Bedien- und Anzeigeelemente für eine weitere Einrichtung aufweist, beispielsweise eine Fahr- Bremssteuerung zur Steuerung des Fahr- und Bremsbetriebes des Schienenfahrzeugs. Die Leiterplatte kann einen auf ihr angeordneten Signalwandler zum Anschluss an den Bus aufweisen. Alternativ oder zusätzlich kann zumindest ein Teil der an der Leiterplatte angeordneten Elemente über einen Signalwandler an den Bus angeschlossen sein, der sich nicht auf der Leiterplatte befindet.

Durch die Zusammenfassung der Bedien- und Anzeigeelemente zu gemeinsamen Baugruppen insbesondere mit einer gemeinsamen Leiterplatte oder anderen tragenden Einheit zum Tragen von Teilen der Anzeige- und Bedienelemente sind eine Vormontage und ein Überprüfen der vormontierten Baugruppen vor der Endmontage möglich. Vorzugsweise wird dabei derselbe Signalwandler und/oder derselbe Bus zum Übertragen digitaler Signale für den Betrieb der Heizungs- und/oder Klimaanlage und für andere Einrichtungen genutzt.

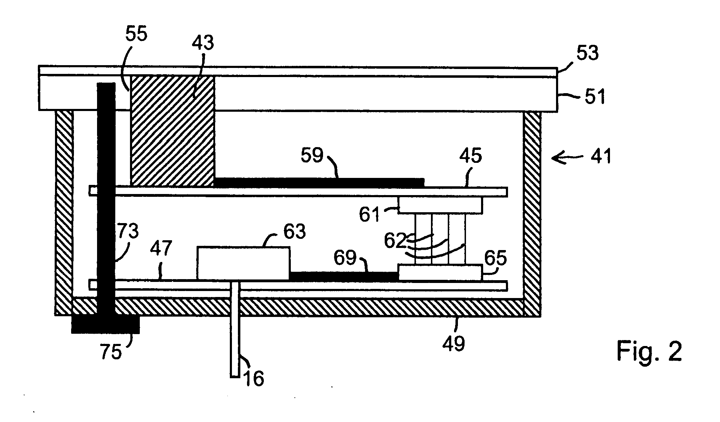

Unter Bezugnahme auf Fig. 2 wird nun ein weiterer bevorzugter Aspekt der vorliegenden Erfindung beschrieben, nämlich die Integration der Bedienelemente und Anzeigeelemente für den Betrieb der Heizungs- und/oder Klimaanlage in eine vormontierte bautechnische Einheit 41, bei der es sich um die bereits im Zusammenhang mit Fig. 1 erwähnte bautechnische Einheit handeln kann. Die Einheit 41 kann daher sämtliche Bedienelemente und Anzeigeelemente der Heizungs- und/oder Klimaanlage aufweisen, obwohl in der schematische Darstellung von Fig. 2 lediglich eines der Elemente (Bezugszeichen 43) erkennbar ist.

Die Einheit 41 weist ein Gehäuse 49 (z. B. aus Aluminiumblech) auf, das einen oben offenen Innenraum definiert. Der Innenraum ist oben durch eine Frontplatte 51 geschlossen. Nach der Endmontage bildet die Frontplatte 51 einen Teil des Führertischs. Die Frontplatte 51 weist an ihrer Oberfläche eine Folie 53 auf. In Aussparungen bzw. Ausnehmungen 55 der Frontplatte 51, jedoch nicht der Folie 53, ist jeweils eines der Bedienelemente und Anzeigeelemente (hier als Beispiel dargestellt: Element 43) eingebracht, sodass die transparente oder durchsichtige Folie 53 zwar das Element 43 abdeckt, jedoch (im Falle eines Anzeigeelements) die Anzeige erkennen lässt oder (im Falle eines Bedienelements) eine Bedienung des Elements 43 durch die flexible Folie 53 hindurch ermöglicht.

Die Elemente 43 sind auf einer Leiterplatte 45 angeordnet und über Leiterbahnen 59 der Leiterplatte 45 mit einem elektrischen Anschluss 61 (beispielsweise einem elektrischen Steckverbinder oder einer Buchse) der Leiterplatte 45 verbunden. In dem in Fig. 2 dargestellten Fall ist eine zweite Leiterplatte 47 vorgesehen, an der der Signalwandler 63 angeordnet ist. Alternativ kann der Signalwandler 63 jedoch auch auf derselben Leiterplatte 45 wie die Elemente 43 angeordnet sein und in diesem Fall über Leiterbahnen mit den Elementen 43 elektrisch verbunden sein.

Im dargestellten Fall jedoch wird die elektrische Verbindung über den elektrischen Anschluss 61, einen weiteren elektrischen Anschluss 65, eine Leitungsverbindung (dargestellt durch vier Linien 62) zwischen den beiden Anschlüssen 61, 65 und Leiterbahnen 69 auf der Leiterplatte 47 hergestellt. Der Bus 16, an den der Signalwandler 63 eingeschlossen ist, ist auch in Fig. 2 mit dem Bezugszeichen 16 bezeichnet.

Ferner sind Befestigungsmittel (z. B. eine in die Frontplatte 51 eingenietete Gewindestange 73) dargestellt, sodass eine solide mechanische Verbindung des Gehäuses 49, mit der Frontplatte 51 und den Leiterplatten 45, 47 (oder der einzigen Leiterplatte) erzielt werden kann. Es kann mehr als ein solches Befestigungsmittel vorgesehen sein. Das oder die Befestigungsmittel erstrecken sich z. B. durch Bohrungen in dem Gehäuse 49 und in der oder in den Leiterplatten hindurch. Zur Fixierung der Leiterplatten können zusätzlich Abstandshalter und/oder Schraubenmuttern (z. B. 75) vorgesehen sein.

## Patentansprüche

1. Anordnung zur Bedienung einer Heizungs- und/oder Klimaanlage (18) eines Schienenfahrzeuges oder Schienenfahrzeug-Zugverbandes, wobei die Anordnung Folgendes aufweist:
- Bedienelemente (3, 5) der Heizungs- und/oder Klimaanlage (18),
- Anzeigeelemente (7, 8), die ausgestaltet sind, einen Zustand der Heizungs- und/oder Klimaanlage (18) anzuzeigen,
- einen Rechner (17), der ausgestaltet ist, Rechenaufgaben für einen Betrieb der Heizungs- und/oder Klimaanlage (18) auszuführen und Stellsignale zum Einstellen der Heizungs- und/oder Klimaanlage (18) zu erzeugen, wobei der Rechner (17) eine Schnittstelle zur Übertragung der Stellsignale an die Heizungs- und/oder Klimaanlage (18) aufweist,
- einen Bus (16), insbesondere einen seriellen Bus, der ausgestaltet ist, digitale Bussignale von und zu dem Rechner (17) zu übertragen, und der mit dem Rechner (17) verbunden ist,
- einen Signalwandler (15), der ausgestaltet ist, digitale Bussignale, die über den Bus übertragen werden, in Anzeigesignale umzuwandeln, mit denen die Anzeigeelemente (7, 8) angesteuert werden, und Bediensignale, die von den Bedienelementen (3, 5) erzeugt werden, in die Bussignale umzuwandeln, wobei der Signalwandler (15) an den Bus (16) angeschlossen ist,
wobei die Anzeigeelemente (7, 8) und die Bedienelemente (3, 5) jeweils ein elektrisches Bauelement (11a - 11d) bilden, das eine Anzeige erzeugt bzw. entsprechend einer Bedienungsaktion das Bediensignal erzeugt, wobei eine einzige bautechnische Einheit (13) vorgesehen ist, die eine Mehrzahl und vorzugsweise alle der zugeordneten elektrischen Bauelemente (11 a - 11 d) der Anzeigeelemente (7, 8) und Bedienelemente (3, 5) der Heizungs- und/oder Klimaanlage (18) trägt, und wobei die bautechnische Einheit (13) über mehrere elektrische Verbindungen (14a - 14d) zum Übertragung der Bediensignale und der Anzeigesignale mit dem Signalwandler (15) verbunden ist oder diesen trägt.

2. Anordnung nach dem vorhergehenden Anspruch, wobei der Rechner (17) ein zentraler Leitrechner ist, der auch weitere Funktionen für den Betrieb weiterer Einrichtungen (28) des Schienenfahrzeuges oder Schienenfahrzeug-Zugverbandes, wie Türsteuerung, Zugsicherung, Fahrzeug-Antriebsteuerung, Fahrzeug-Bremse und/oder Fahrzeug-Stromversorgung ausführt, und wobei der Bus (16) auch der Übertragung von digitalen Signalen für die Bedienung und/oder Zustands-Anzeige der weiteren Funktionen dient.

3. Anordnung nach dem vorhergehenden Anspruch, wobei der Signalwandler (15) auch die digitalen Bussignale für den Betrieb der weiteren Funktionen in Anzeigesignale umwandelt, mit denen entsprechende Anzeigeelemente angesteuert werden, und/oder Bediensignale, die von Bedienelementen für den Betrieb der weiteren Funktionen erzeugt werden, in die Bussignale umwandelt.

4. Verfahren zur Montage einer Anordnung zur Bedienung einer Heizungs- und/oder Klimaanlage (18) eines Schienenfahrzeuges oder Schienenfahrzeug-Zugverbandes nach einem der Ansprüche 1 bis 3, wobei elektrische Bauelemente (11 a - 11 d) der Bedienelemente (3, 5) und/oder der Anzeigelemente (7, 8), und der Signalwandler (15) in einer Vormontage zu der bautechnischen Einheit (13) miteinander verbunden werden, wobei die elektrischen Bauelemente (11a - 11d) beim Betrieb der Anordnung eine Anzeige erzeugen bzw. entsprechend einer Bedienungsaktion Bediensignale erzeugen.

5. Verfahren nach dem vorhergehenden Anspruch, wobei die miteinander verbundenen Bauelemente (11a - 11d) und Signalwandler (15) nach der Vormontage und vor einer Endmontage auf korrekte Funktion überprüft werden.

## Claims

1. Device for the operation of a heating and/or air conditioning unit (18) of a railway vehicle or multi-vehicle train, whereby the device comprises the following:
- operational components (3, 5) of the heating and/or air conditioning unit (18),
- display elements (7, 8) configured to display a status of the heating and/or air conditioning unit (18),
- a processor (17) configured to carry out calculations for operating the heating and/or air conditioning unit (18) and to produce control signals for adjusting the heating and/or air conditioning unit (18), whereby the processor (17) contains an interface for transmission of control the signals to the heating and/or air conditioning unit (18),
- a bus (16), in particular a serial bus, configured to transmit digital bus signals from and to the processor (17), and which is connected to the processor (17),
- a signal transducer (15) configured to convert digital bus signals transmitted by the bus into display signals, with which the display elements (7, 8) are actuated, and to convert operation signals produced by the operational components (3, 5) into bus signals, whereby the signal transducer (15) is connected to the bus (16),
whereby the display elements (7, 8) and operational components (3, 5) each form an electric unit (11a - 11d) which generates an indication and the operation signal corresponding to an operation action, whereby a single structural unit (13) which carries a plurality, and preferably all, of the associated electric units (11a - 11d) of the display elements (7, 8) and operational components (3, 5) of the heating and/or air conditioning unit (18), and whereby the structural unit (13) carries, or is connected to the signal transducer (15) by means of a plurality of electrical connections (14a - 14d) for the transmission of operation signals and display signals.

2. Device according to the preceding claim, whereby the processor (17) is a central host computer, which also performs additional functions for the operation of further railway vehicle or multi-vehicle train services (28) such as door control, train safety, vehicle drive control, vehicle braking and/or vehicle power supply, and whereby the bus (16) is also used to transmit digital signals for the operation and/or status display of the additional functions.

3. Device according to the preceding claim, whereby the signal transducer (15) also converts the digital bus signals for the operation of the additional functions into display signals, by means of which appropriate display elements are actuated, and/or converts operation signals, which are produced by the operational components for the operation of the additional functions, into bus signals.

4. Method for installing a device for the operation of a heating and/or air conditioning unit (18) of a railway vehicle or multi-vehicle train according to one of Claims 1-3, whereby electric units (11a - 11d) of the operational components (3, 5) and/or of the display elements (7, 8) and the signal transducer (15) are connected to each other in a pre-assembly procedure to form the structural unit (13), whereby the electric units (11a - 11d) produce an indication during the operation of the device and produce operation signals corresponding to an operation action.

5. Method according to the preceding claim, whereby the connected units (11a - 11d) and signal transducer (15) are tested after the pre-assembly and before final assembly as to their correct function.

## Revendications

1. Ensemble servant à commander une installation de chauffage et/ou de climatisation (18) d'un véhicule ferroviaire ou d'un convoi de véhicules ferroviaire, sachant que l'ensemble présente les éléments suivantes :
- des éléments de commande (3, 5) de l'installation de chauffage et/ou de climatisation (18),
- des éléments d'affichage (7, 8) configurés pour afficher l'état de l'installation de chauffage et/ou de climatisation (18),
- un ordinateur (17) configuré pour réaliser des opérations de calcul pour un fonctionnement de l'installation de chauffage et/ou de climatisation (18) et pour générer des signaux de réglage servant à régler l'installation de chauffage et/ou de climatisation (18), sachant que l'ordinateur (17) présente une interface servant à transférer des signaux de réglage à l'installation de chauffage et/ou de climatisation (18),
- un bus (16), en particulier un bus en série, configuré pour transférer des signaux de bus numériques par et vers l'ordinateur (17) et relié à l'ordinateur (17),
- un convertisseur de signal (15) configuré pour convertir des signaux de bus numériques, qui sont transférés par l'intermédiaire du bus, en des signaux d'affichage, lesquels permettent de commander les éléments d'affichage (7, 8), et pour convertir des signaux de commande, lesquels sont générés par les éléments de commande (3, 5), en des signaux de bus, sachant que le convertisseur de signal (15) est raccordé au bus (16),
sachant que les éléments d'affichage (7, 8) et les éléments de commande (3, 5) forment respectivement un composant électrique (11a-11d) qui génère un relevé ou génère de manière à correspondre à une action de commande le signal de commande, sachant qu'une seule unité de construction (13) est prévue, laquelle supporte une pluralité et de préférence tous les composants (11a-11d) électriques associés des éléments d'affichage (7, 8) et des éléments de commande (3, 5) de l'installation de chauffage et/ou de climatisation (18), et sachant que l'unité de construction (13) est reliée au convertisseur de signal (15) par l'intermédiaire de plusieurs liaisons électriques (14a-14d) servant à transférer les signaux de commande et les signaux d'affichage ou supporte ledit convertisseur de signal.

2. Ensemble selon la revendication précédente, sachant que l'ordinateur (17) est un ordinateur pilote central qui exécute d'autres fonctions pour le fonctionnement d'autres dispositifs (28) du véhicule ferroviaire ou du convoi de véhicules ferroviaires, telles que la commande des portes, la protection du train, la commande d'entraînement des voitures, le freinage des voitures et/ou l'alimentation en courant des voitures, et sachant que le bus (16) sert également au transfert de signaux numériques pour la commande et/ou l'affichage de l'état des autres fonctions.

3. Ensemble selon la revendication précédente, sachant que le convertisseur de signal (15) convertit également les signaux de bus numériques pour le fonctionnement des autres fonctions en des signaux d'affichage, lesquels permettent de commander des éléments d'affichage correspondants, et/ou convertit des signaux de commande, qui sont générés par des éléments de commande pour le fonctionnement des autres fonctions, en des signaux de bus.

4. Procédé servant au montage d'un ensemble servant à commander une installation de chauffage et/ou de climatisation (18) d'un véhicule ferroviaire ou d'un convoi de véhicules ferroviaires selon l'une quelconque des revendications 1 à 3, sachant que des composants (11a-11d) électriques des éléments de commande (3, 5) et/ou des éléments d'affichage (7, 8) et le convertisseur de signal (15) sont reliés les uns aux autres dans un montage préalable pour former l'unité de construction (13), sachant que les composants (11a-11d) électriques génèrent lors du fonctionnement de l'ensemble un relevé ou génèrent de manière à correspondre à une action de commande des signaux de commande.

5. Procédé selon la revendication précédente, sachant qu'on vérifie après le montage préalable et avant le montage final que les composants (11a-11d) reliés entre eux et le convertisseur de signal (15) fonctionnent correctement.
